# EUROPÄISCHE PATENTSCHRIFT

(11) **EP 2 755 792 B1**
(45) Veröffentlichungstag und Bekanntmachung des Hinweises auf die Patenterteilung: **21.10.2020**
(21) Anmeldenummer: 11813527.6
(22) Anmeldetag: 16.09.2011
(51) Int. Cl.: B23H 7/08

(54) **DRAHTELEKTRODE ZUM FUNKENEROSIVEN SCHNEIDEN VON GEGENSTÄNDEN**
WIRE ELECTRODE FOR THE SPARK-EROSIVE CUTTING OF ARTICLES
FIL ÉLECTRODE UTILISÉ POUR LA COUPE PAR ÉTINCELAGE D'OBJETS

(43) Veröffentlichungstag der Anmeldung: 23.07.2014
(73) Patentinhaber: Heinrich Stamm GmbH, 58644 Iserlohn (DE)
(72) Erfinder: WEBER, Paul, 58640 Iserlohn (DE)
(74) Vertreter: Sander, Rolf
(86) Internationale Anmeldenummer: PCT/DE2011/001768
(87) Internationale Veröffentlichungsnummer: WO 2013/037336

(56) Entgegenhaltungen:
- EP-A1- 1 949 995
- EP-A1- 2 193 867
- WO-A2-03/053621
- JP-A- 2003 039 247
- US-A- 4 935 594

## Beschreibung

Die Erfindung betrifft eine Drahtelektrode zum funkenerosiven Schneiden von Gegenständen mit einem elektrisch leitenden Kern und einem den Kern umgebenden Mantel, der wenigstens eine Alpha/Beta-Mantelschicht aufweist, eine homogene Phase aus β-Messing und/oder β'-Messing ausbildet, in der Messingkörner eingelagert.

Die Erfindung betrifft ferner ein Verfahren zum Herstellen einer solchen Drahtelektrode, bei dem auf einem elektrisch leitfähigen Ausgangsdraht, der eine Kernaußenschicht aus Kupfer oder α-Messing aufweist, eine Zinkschicht aufgebracht wird.

Eine solche Drahtelektrode ist aus der WO 03/053621 A2 bereits bekannt. Die dort gezeigte Drahtelektrode besteht aus einem Kupferkern, der von einem Mantel umgeben ist. Der Mantel weist eine homogene Phase aus β-Messing und/oder β'-Messing auf, in der Messingkörner eingelagert sind. Die Messingkörner bestehen aus α-Messing, das in seiner α-Phase vorliegt.

EP 2 193 867 A1 offenbart ebenfalls eine Drahtelektrode zum funkenerosiven Schneiden von metallischen Werkstücken. Für den Bearbeitungsprozess wird der Drahtelektrode ein ausreichend hohes elektrisches Potential aufgeprägt. Der zu bearbeitende Gegenstand liegt hingegen in der Regel auf Erdpotential. Bei einer ausreichenden Annährung kommt zwischen der mechanisch gespannten Drahtelektrode und dem Werkstück zu einer Funkentladung, wodurch die gewünschte Schneidwirkung bereitgestellt wird. Bei der Funkenentladung wird das Material der Drahtelektrode fortwährend abgetragen. Um den vollständigen Verschleiß und somit ein Reißen des Drahtes zu vermeiden, wird dieser während des Schneid- oder Bearbeitungsvorganges fortwährend durch die Schneidzone gezogen.

Zur Verbesserung der Schneidleistung der Drahtelektrode wird in der EP 2 193 867 vorgeschlagen, mehrere Mantelschichten in radialer Richtung übereinander anzuordnen, wobei die äußerste Mantelschicht, die also dem Werkstück unmittelbar zugewandt ist, aus einer feinkörnigen Mischung aus β- und/oder β'-Messing sowie γ-Messing besteht. Die γ-Phase dient der Förderung der Entladungsvorgänge im Bearbeitungsspalt und somit der Bereitstellung einer hohen Schnittgüte. Dabei sei das γ-Messing jedoch ausreichend stark in das Gefüge der äußeren Mantelschicht eingebunden, so dass hohe Schnittleistungen erzielt würden. Aufgrund der feinkörnigen Ausgestaltung der Phasen sei eine hohe Anzahl von Korngrenzen vorhanden, die bevorzugt als Fußpunkte für die Funkenentladung dienen. Dies verbessere die Zündwilligkeit des Drahtes und somit vor allem die Güte des Schnitts. Die Dicke der Mantelschicht ist üblicherweise von der Dimensionierung des zu schneidenden Gegenstandes abhängig. Da sich eine äußere β- und γ-Messing enthaltende Schicht ab einer bestimmten Dicke nachteilig auf die elektrische Leitfähigkeit und die Zugfestigkeit der Drahtelektrode auswirken würde, ist gemäß der Lehre der EP 2 193 867 eine innere Mantelschicht vorgesehen, die aus β- und/oder β'-Messing und/oder α+β- und/oder a+ß'-Messing besteht. Die besagten Phasen liegen in der inneren Mantelschicht in einem grobkörnigen Gefüge nebeneinander vor. Durch diese Zwischenschicht werde die Gesamtstärke des Mantels erhöht und somit die Erosionsbeständigkeit der Drahtelektrode gesteigert.

Aus der DE 19911095 B4 ist eine Drahtelektrode bekannt, die einen Kern aus einer Kupferzinklegierung und eine Mantelschicht aufweist, die den Kern umschließt. Die Mantelschicht kann beispielsweise aus Messing bestehen, das in seiner α+β-Phase vorliegt.

Aufgabe der Erfindung ist es, eine Drahtelektrode der eingangs genannten Art bereitzustellen, die sowohl schnell als auch mit hoher Güte schneidet.

Ferner ist Aufgabe der Erfindung ein Verfahren der eingangs genannten Art bereitzustellen, mit der eine solche Drahtelektrode hergestellt werden kann.

Diese Aufgabe wird ausgehend von der eingangs genannten Drahtelektrode gelöst, durch eine Drahtelektrode nach Anspruch 1.

Ausgehend von dem eingangs genannten Verfahren löst die Erfindung die Aufgabe durch ein Verfahren nach Anspruch 9.

Erfindungsgemäß konnte festgestellt werden, dass eine Drahtelektrode mit einer Mantelschicht, die eine homogene β- und/oder β'-Messingphase aufweist, in der Messingkörner mit einer α+β-Mischphase eingelagert sind, hervorragende Schneideigenschaften aufweist. So kann die erfindungsgemäße Drahtelektrode beispielsweise zum Schnellschnitt eingesetzt werden. Hierbei wird in der Regel die Kontur aus dem vollen Material des Werkstücks herausgearbeitet, wobei hohe elektrische Leistungen über der Drahtelektrode geführt werden. Es hat sich jedoch gezeigt, dass auch die Oberflächen der geschnittenen Werkstoffabschnitte eine den Anforderungen gerecht werdende Güte aufweisen, so dass nachfolgende Feinschnitte überflüssig geworden sind. Mit anderen Worten sind auch bei einem Schnellschnitt Unebenheiten auf den Schnittflächen des Werkstücks in Gestalt von Nuten und konisch ausgestaltete Einschnitte vermieden. Die eingelagerten Messingkörner werden ausreichend fest in der homogenen β/β'-Messingphase gehalten, so dass für eine nachhaltige Zündwilligkeit bei der Funkenentladung gesorgt ist. Gleichzeitig ist jedoch auch eine ausreichend hohe Schneidegeschwindigkeit bereitgestellt, die vor allem der homogenen β- und/oder β'-Messingphase zuzuschreiben sein dürfte. Die in der Alpha/Beta-Messingschicht eingelagerten Messingkörner bestehen aus Messing, das in seiner α+β-Mischphase vorliegt, wobei der Zinkgehalt dieser Phase bevorzugt zwischen 55 und 62 Gewichtsprozent variiert. Erstaunlicherweise führt gerade die Einlagerung von Messingkörner mit diesem Zinkanteil zu besonders verbesserten Schneideigenschaften.

Unter dem Begriff Einlagerung ist im Sinne der Erfindung zu verstehen, dass die eingelagerten Messingkörner, die nicht der äußeren oder inneren Oberfläche der Alpha/Beta-Mantelschicht zugewandt sind, vollständig von dem homogenen β/β'-Messing umgeben sind. In einer Querschnittsansicht bilden die eingelagerten Messingkörner somit Inseln aus, die vollständig von einer homogenen Matrix aus β/β'-Messing umgeben sind. Lediglich die eingelagerten Messingkörner, die eine der Oberflächen der Alpha/Beta-Mantelschicht definieren, sind nur teilweise von einer homogenen Messingmatrix umgeben, die in der β- und/oder β'-Phase vorliegt.

Vorteilhafterweise liegt der Anteil der eingelagerten Messingkörner in der Alpha/Beta-Mantelschicht zwischen 10 Gewichtsprozent und 30 Gewichtsprozent. Liegt der Anteil der eingelagerten Messingkörner in diesem Bereich, sind die Schneideigenschaften der erfindungsgemäßen Drahtelektrode besonders vorteilhaft. Dies betrifft sowohl die Güte des Schnittes hinsichtlich der Oberflächen der geschnittenen Werksstoffseiten als auch die Geschwindigkeit, mit welcher der Schneidvorgang erfolgen kann.

Vorteilhafterweise ist der Querschnitt der Drahtelektrode im Wesentlichen kreisförmig oder rundlich, wobei die in der Alpha/Beta-Mantelschicht eingelagerten Messingkörner länglich ausgestaltet und in überwiegend radialer Richtung ausgerichtet sind. Die Dimensionierung der eingelagerten Messingkörner kann von Korngrößen mit einem Durchmesser oder einer Länge von wenigen Mikrometern zu α+β-Kristalliten variieren, deren Längsausdehnung im Bereich von 20 bis 30 µm liegt. Durch die längliche Gestalt und radiale Ausrichtung der eingelagerten Messingkörner bleiben die Schneideigenschaften der Drahtelektrode über den gesamten Erodierprozess hinweg, in dem die Dicke des Mantels fortwährend abnimmt, im Wesentlichen konstant. Darüber hinaus ist sichergestellt, dass die eingelagerten Messingkörner sich auch in die oberflächennahen Bereiche der Alpha/Beta-Mantelschicht hinein erstrecken, so dass die positive Schneidwirkung der eingelagerten Messingkörner sich bereits zu Beginn des Erodierprozesses entfalten kann. Die Verteilung der eingelagerten Messingkörner in der Alpha/Beta-Mantelschicht ist gleichmäßig, folgt jedoch keiner vorgegebenen Gesetzmäßigkeit.

Gemäß einer Variante ist die Alpha/Beta-Mantelschicht die äußerte Mantelschicht. Hierbei kann der Mantel vollständig oder mit anderen Worten nur aus der besagten Alpha/Beta-Mantelschicht bestehen.

Abweichend hiervon weist der Mantel eine weitere γ-Mantelschicht auf, die überwiegend aus γ-Messing besteht. Mit dieser zusätzlichen γ-Mantelschicht kann die Güte des Schnittes, also beispielsweise die Tiefe und Breite der auf den geschnittenen Oberflächen des Werkstücks hervorgerufenen Schneidnuten noch weiter verringert werden. Hierbei kann die γ-Mantelschicht vollständig aus γ-Messing bestehen. Bei einer diesbezüglichen bevorzugten Variante ist die γ-Mantelschicht die äußerste Mantelschicht.

Vorteilhafterweise besteht der Kern der erfindungsgemäßen Drahtelektrode zumindest in seiner äußeren, an den Mantel angrenzenden Kernaußenschicht aus Kupfer und/oder α-Messing. Kupfer- oder α-Messing weisen eine hervorragende elektrische Leitfähigkeit auf und sind darüber hinaus weich und verformbar, so dass die Verarbeitung des Drahtes vereinfacht ist. So kann der Draht beispielsweise besser gewickelt, gespannt und gezogen werden. Abweichend davon wurde das Kupfer der Kernaußenschicht bei der Herstellung der erfindungsgemäßen Drahtelektrode vollständig verbraucht, so dass eine kupferfreie Kernaußenschicht vorliegt.

Bezüglich des erfindungsgemäßen Verfahrens ist es vorteilhaft, wenn die Haltezeit 3 Stunden und die Glühtemperatur 500°C betragen. Drahtelektroden, die mit diesen Verfahrensparametern hergestellt sind, stellen die besten Schneideigenschaften bereit. Vorteilhafterweise weist der Ausgangsdraht einen Durchmesser zwischen 0,5 und 1,5 mm auf, wobei die Zinkschichtdicke zwischen 1 und 20 µm variiert.

Zweckmäßigerweise wird die Drahtelektrode nach dem Ziehen auf den Enddurchmesser einer Entspannungswärmebehandlung unterzogen. Die hierbei eingestellten Temperaturen liegen unterhalb der Temperaturen, die zur Aktivierung einer messtechnisch nachweisbaren Diffusion von Kupfer und Zinkteilchen erforderlich sind. Durch das Entspannungsglühen werden lediglich die Materialeigenschaften der jeweiligen Drahtelektrode verbessert. So wird bevorzugt aus einem ziehharten Draht ein harter Draht, wobei die Zugfestigkeit konstant und beispielsweise bei 800 N/mm² verbleibt.

Zur Herstellung der γ-Mantelschicht wird die Drahtelektrode vorteilhafterweise mit einer duktilen Zinkschicht beschichtet und erst anschließend auf ihren Enddurchmesser gezogen, woraufhin sich ein Glühen in einer Schutzgasatmosphäre anschließt. Das Glühen erfolgt beispielsweise in einem Durchziehglühofen bei Temperaturen zwischen 250°C und 350°C und einer Durchziehgeschwindigkeit zwischen 0,4 und 1,5 m/s. Abweichend davon erfolgt das Glühen stationär bei Temperaturen zwischen 90°C und 150°C über einen Zeitraum von 2 bis 20 Stunden hinweg. Die Art und Weise der Beschichtung mit Zink ist im Rahmen der Erfindung grundsätzlich beliebig. Erfindungsgemäß können beliebige Verfahren zum Aufbringen einer Zinkschicht auf einen Draht zum Einsatz gelangen. Beispielsweise wird die Zinkschicht galvanisch auf die α+β-Mantelschicht aufgebracht.

Beim Glühprozess kommt es zu einer Anreicherung der Zink-Schicht mit Kupfer, wobei sich in der äußern Mantelschicht des Mantels Messing ausbildet, das in der Gamma-Phase vorliegt. Beim Glühen im Durchziehglühofen ist der Durchlaufofen beispielsweise rohrförmig ausgestaltet, wobei entgegen der Durchlaufrichtung des Drahtes Schutzgas, bevorzugt ein N₂/H₂-Gemisch, in den Durchlaufofen entgegen der Laufrichtung der Drahtelektrode geblasen wird, so dass ungewollte Oxidationsreaktionen vermieden sind. Bei den oben angegebenen Geschwindigkeiten, mit welcher der Draht durch den Durchlaufofen gezogen wird, ergibt sich eine Verweilzeit der Drahtelektrode im Heizabschnitt des Ofens von etwa 1 bis 2 Sekunden. Aufheiz- und Abkühlgeschwindigkeit liegen jeweils zwischen 150 und 200°C/s. Auf Grund der Wärmebehandlung wird Kupfer aus der Alpha/Beta-Mantelschicht in die Mantelschicht getrieben mit einer Anreicherung der Zinkschicht mit Kupfer-Teilchen im Gefolge. Die Prozessbedingungen sind so gewählt, dass sich Messing in der Gamma-Phase ausbildet mit einem Zinkanteil von beispielsweise etwa 65 Gewichtsprozent. Da der Draht nach der "Umwandlung" der Mantelschicht in Gamma-Messing nicht mehr gezogen wird, ist eine kontinuierliche äußere Mantelschicht aus Gamma-Messing bereitgestellt.

Die äußere Gammaschicht ermöglicht noch schnellere Schnitte der bevorzugt metallischen Werkstücke.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel eines Ausgangsdrahtes zur Herstellung der erfindungsgemäßen Drahtelektrode in einer schematischen Querschnittsansicht,
- Figur 2: den Draht gemäß Figur 1 nach dem stationären Glühen unter Schutzgas ebenfalls in einer schematischen Querschnittsansicht,
- Figur 3: einen Teilausschnitt des Drahtes gemäß Figur 2,
- Figur 4: ein Ausführungsbeispiel der erfindungsgemäßen Drahtelektrode in einer Ansicht gemäß Figur 3,
- Figur 5: ein weiteres Ausführungsbeispiel der erfindungsgemäßen Drahtelektrode kurz vor ihrer Fertigstellung in einer Ansicht gemäß Figur 3,
- Figur 6: die Drahtelektrode gemäß Fig. 5 nach ihrem Ziehen auf den Enddurchmesser und einem anschließenden Entspannungsglühen als weiteres Ausführungsbeispiel der erfindungsgemäßen Drahtelektrode und
- Figur 7: eine mit einem Elektronenmikroskop aufgenommene fotographische Querschnittsansicht eines Ausführungsbeispiels der erfindungsgemäßen Drahtelektrode zeigen.

Mit der Formulierung α-Messing ist im Rahmen der Erfindung gemeint, dass das Messing in seiner α-Phase vorliegt. Dies gilt entsprechend für β-Messing, β'-Messing, α+β-Messing; α+β'-Messing und γ-Messing.

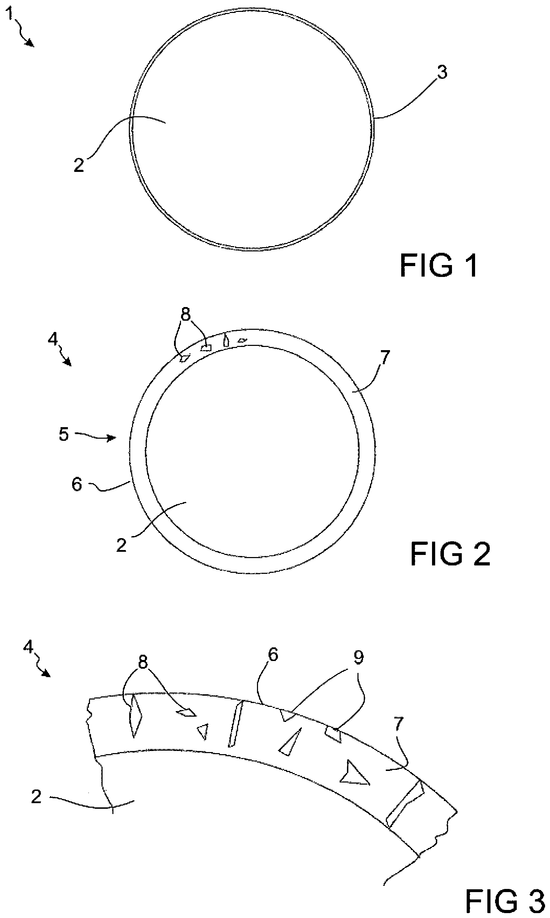

Figur 1 zeigt in einer schematischen Querschnittsansicht ein Ausführungsbeispiel eines Ausgangsdrahtes 1 zur Herstellung der erfindungsgemäßen Drahtelektrode. Der dort gezeigte Ausgangsdraht 1 weist einen in Kern 2 auf, der in dem gezeigten Ausführungsbeispiel vollständig aus α-Messing mit einem Zinkgehalt von 36 Gewichtsprozent besteht. Abweichend hiervon kann der Kern 2 jedoch auch beispielsweise vollständig aus Kupfer bestehen. Auch ist es möglich, dass ein Ausgangsdraht 1 mit einer Stahlseele eingesetzt wird, wobei die aus Stahl bestehende Stahlseele mit einer ringförmigen Kernaußenschicht aus Kupfer oder α-Messing umgeben ist. In der gezeigten Querschnittsansicht weist der Kern 2 eine kreisförmige Außenkontur auf. Der ebenfalls kreisförmige Ausgangsdraht 1 verfügt weiterhin über eine den Kern 2 vollständig umschließende Zinkschicht 3. Das Verfahren zum Aufbringen der Zinkschicht ist im Rahmen der Erfindung grundsätzlich beliebig. In dem gezeigten Ausführungsbeispiel wurde das Zink galvanisch auf dem Kern 2 abgeschieden.

Der Kern 2 verfügt über einen Durchmesser von in etwa 1 mm. Die Dicke der Zinkschicht variiert vorteilhafterweise zwischen 10 µm und 20 µm. Der so hergestellte Ausgangsdraht 1 wurde anschließend stationär unter Stickstoff bei einer Temperatur von 500°C über 3 Stunden hinweg geglüht. Das Glühen erfolgte in einem so genannten Haubenofen. Die Aufheizgeschwindigkeit betrug 80-100°C pro Stunde. Nach der besagten Haltezeit von 3 Stunden wurde der Draht mit einer Abkühlgeschwindigkeit zwischen 60 und 80°C pro Stunde abgekühlt.

Figur 2 zeigt die auf diese Weise erhaltene Drahtelektrode 4. Ihr Durchmesser beträgt immer noch in etwa 1mm. Der Kern 2 aus α-Messing ist von einem Mantel 5 umgeben, der aus einer einzigen Alpha/Beta-Mantelschicht 6 besteht. Die Alpha/Beta-Mantelschicht 6 enthält homogenes β-Messing und/oder β'-Messing 7, wobei in dieser homogenen β/ β'-Messingphase 7 Messingkörner 8 eingelagert sind, die aus Messing mit einer α+β-Phase bestehen. Der Zinkgehalt dieser α+β/α+β'-Messingkörner liegt in dem gezeigten Ausführungsbeispiel zwischen 58 und 60 Gewichtsprozent.

Durch den erfindungsgemäßen stationären Glühprozess diffundieren Kupferteilchen aus dem Kern 2 in die Zinkschicht 3 hinein, wobei gleichzeitig Zinkteilchen in den Kern 2 hinein wandern. Dies führt zu einer Vergrößerung der Schichtdicke der Mantelschicht 6 auf etwa 60 µm. Die Außenkontur des Kerns 2 ist in der in Figur 2 gezeigten Querschnittsansicht im Wesentlichen kreisförmig geblieben.

Figur 3 zeigt eine vergrößerte Darstellung der Drahtelektrode 4 gemäß Fig. 2. Es ist erkennbar, dass die eingelagerten Messingkörner 8 vollständig in die homogene Messingphase 7 aus β- und/oder β'-Messing eingebettet sind. Mit anderen Worten sind die eingelagerten Messingkörner 8 vollständig von β- und/oder β'-Messing 7 umgeben oder mit anderen Worten eingelagert. Lediglich eingelagerte Messingkörner 8, die an der äußeren oder inneren Oberfläche der Alpha/Beta-Mantelschicht 6 angeordnet sind und deren Oberflächen mit begrenzen, sind nur an ihrer der besagten Oberfläche zugewandten Seite nicht von β- und/oder β'-Messing 7 umgeben.

Weiterhin ist in Figur 3 erkennbar, dass die eingelagerten Messingkörner 8 überwiegend länglich ausgestaltet sind, wobei sie eine Längsrichtung definieren und wobei sie mit ihrer besagten Längsrichtung radial, also in einer Querschnittsansicht vom Mittelpunkt des Kerns 2 ausgesehen strahlenförmig ausgerichtet sind. Diese Anordnung bewirkt, dass die länglichen eingelagerten Messingkörner 8 in die oberflächennahen Bereiche der Alpha/Beta-Mantelschicht 6 hineinragen und somit über den gesamten Erodierprozess für ein gleichbleibendes Schneidverhalten der fertig hergestellten Drahtelektrode sorgen. Allerdings sind auch kleinere rundliche α+β-Messingkörner 8 erkennbar, deren Durchmesser im Bereich weniger Mikrometer liegt. Die α+β-Messingkörner 8 sind stochastisch und gleichmäßig in der Alpha/Beta-Mantelschicht verteilt.

Anschließend wird die Drahtelektrode 4 gemäß der Figuren 2 und 3 auf ihren Enddurchmesser von beispielsweise etwa 0,25 mm gezogen. Hieran schließt sich eine Wärmebehandlung in Gestalt eines so genannten Entspannungsglühprozesses an. Das Entspannungsglühen erfolgt bei Temperaturen, bei denen nachweisbare Diffusionsprozesse von Kupfer und Zink weitestgehend ausgeschlossen werden können.

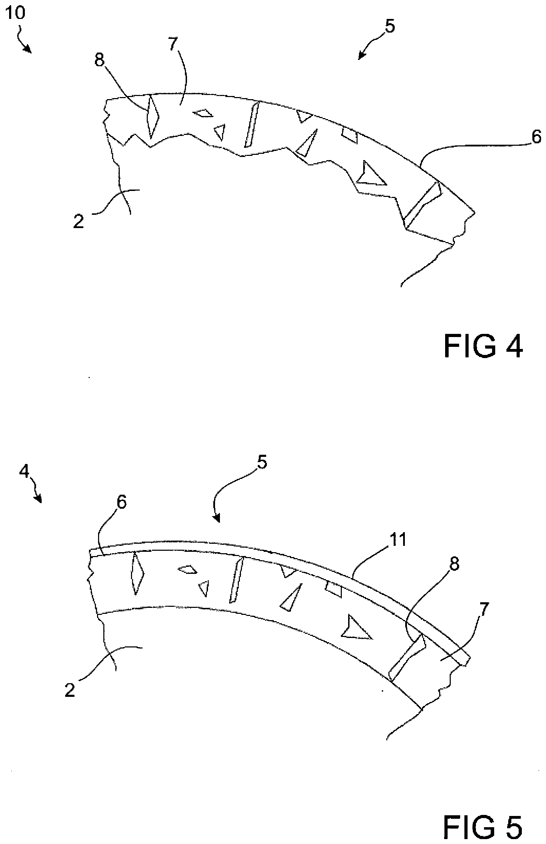

Figur 4 zeigt eine solche auf ihr Enddurchmesser gezogene Drahtelektrode 10 nach dem Entspannungsglühen als erstes Ausführungsbeispiel der erfindungsgemäßen Drahtelektrode. Die Drahtelektrode 10 unterscheidet sich von der in den Figuren 2 und 3 gezeigten Drahtelektrode 4 dadurch, dass die Außenkontur des Kerns 2 nicht mehr ideal kreisförmig ist. Durch das Ziehen auf den Enddurchmesser ist die Außenfläche etwas gezackt und der Kern 2 in seinem Außenbereich zum Mantel 5 daher rauer geworden. Dies ist den vergleichsweise harten α+β-Messingkörnern 8 geschuldet, die den weicheren Kern 2 beim Ziehen unterschiedlich stark eindrücken können. Die Dicke der Alpha/Beta-Mantelschicht 6 des Mantels 5 beträgt etwa 16 µm. Ansonsten entspricht die Struktur der Alpha/Beta-Mantelschicht 6 im Wesentlichen der im Zusammenhang mit den Figuren 2 und 3 diskutierten Struktur. Insbesondere ist eine homogene Matrix 7 aus Messing erkennbar, das in seiner β- und/oder β'-Phase vorliegt. In die besagte homogene β/β'-Messingphase 7 sind Messingkörner 8 aus einer α+β- und/oder einer α+β'-Phase eingelagert. Die längliche Ausgestaltung der eingelagerten Messingkörner 8 wurde durch das Ziehen auf den Enddurchmesser nicht beeinflusst und auch nicht deren ebenfalls weiter oben beschriebene radiale Ausrichtung. Die dort gemachten Ausführungen gelten daher unverändert für das in Figur 4 gezeigte Ausführungsbeispiel der erfindungsgemäßen Drahtelektrode 10. Deren Zugfestigkeit beträgt 800 N/mm².

Die Figur 5 zeigt eine Drahtelektrode 4 gemäß Figur 3, die jedoch vor dem Ziehen auf ihren Enddurchmesser galvanisch verzinkt wurde, so dass sich eine äußere Zinkschicht 11 ausgebildet hat, die den Kern 2 und die Alpha/Beta-Mantelschicht 6 vollständig umschließt. Der Mantel 5 der Drahtelektrode 4 umfasst nunmehr eine Alpha/Beta-Mantelschicht 6 und eine diese geschlossen umgebende äußere Zinkschicht 11. Die Dicke der Zinkschicht 11 beträgt in dem gezeigten Ausführungsbeispiel etwa zwischen 3 und 4 µm. Die Drahtelektrode 4 gemäß Figur 5 wurde anschließend auf ihren Enddurchmesser von 0,25 mm gezogen. Daran schloss sich wieder ein Entspannungsglühen an. Aus dem ziehharten Draht wurde somit ein harter Draht mit einer Zugfestigkeit von etwa 800 N/mm². Die beim Entspannungsglühen eingestellte Temperatur war so gering, dass Diffusionsprozesse hierbei sicher vermieden werden konnten. Das Diffusionsglühen dient lediglich dem Einstellen des Härtegrades der Drahtelektrode.

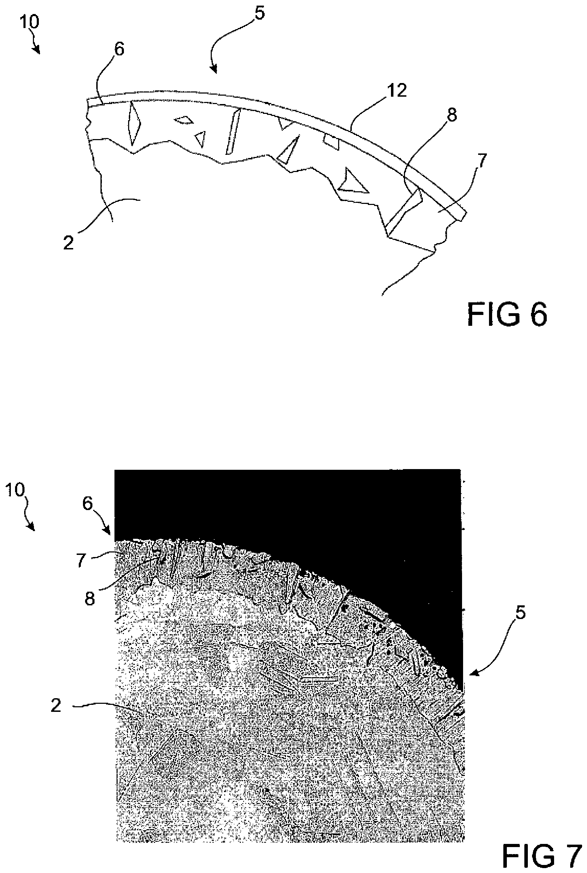

Anschließend wurde die auf ihren Enddurchmesser gezogene Drahtelektrode 4 in einem Durchziehglühofen in einer Schutzgasatmossphäre aus einem Stickstoff- Wasserstoffgemisch geglüht. Die Glühtemperatur betrug 310°C. Die Drahtelektrode wurde mit einer Geschwindigkeit von 0,6 m/s durch den Durchziehglühofen gezogen. Die Verweilzeit der Drahtelektrode im Heizbereich des Glühofens betrug etwa 1 bis 2 Sekunden. Die hierbei erhaltene Drahtelektrode 10 ist in Figur 6 als weiteres Ausführungsbeispiel der erfindungsgemäßen Drahtelektrode gezeigt.

Wie bereits im Zusammenhang mit Figur 4 erläutert wurde, weicht die Außenkontur des Kerns 2 in der gezeigten Querschnittsansicht nach dem Ziehen der Drahtelektrode 10 auf ihren Enddurchmesser von einer idealen Kreisform ab. In Figur 6 ist ein zackiger Verlauf der Oberfläche des Kerns 2 erkennbar. Die Struktur und Konfiguration der α+β-Manfelschicht 6 ist im Wesentlichen unverändert geblieben, so dass die diesbezüglichen im Zusammenhang mit Figur 4 gemachten Ausführungen auch hier unverändert gelten. So besteht die Alpha/Beta-Mantelschicht 6, aus homogenem β/β'-Messing 7, also Messing das in seiner β-Phase oder β'-Phase vorliegt. In dieses homogene β-/β'-Messing 7 sind Messingkörner 8 aus einer α+β- und/oder einer α+β'-Phase eingelagert. Der Mantel 5 umfasst jedoch nunmehr eine weitere zweite Mantelschicht 12 die aus nahezu homogenem γ-Messing besteht. Der so hergestellte Draht weist eine Zugfestigkeit von etwa 800 N/mm² auf.

Figur 7 zeigt eine mit einem Elektronenmikroskop aufgenommene fotografische Aufnahme einer quer geschnittenen geschliffenen beispielhaften erfindungsgemäßen Drahtelektrode 10. Zunächst ist der typische Aufbau des Kerns 2 aus α-Messing erkennbar, der das typische α-Gefüge mit Polygonen und Zwillingen aufzeigt. Es ist ferner erkennbar, dass der Mantel 5 eine einzige Alpha/Beta-Mantelschicht 6 aufweist. Insbesondere ist die homogene Struktur des β-/β'-Messings 7 erkennbar und die darin eingelagerten Messingkörner 8 aus einer α+β- und/oder einer α+β'-Phase.

## Patentansprüche

1. Drahtelektrode (10) zum funkenerosiven Schneiden von Gegenständen mit einem elektrisch leitenden Kern (2) und einem den Kern (2) umgebenden Mantel (5), der wenigstens eine Alpha/Beta-Mantelschicht (6) aufweist, eine homogene Phase (7) aus β-Messing und/oder β'-Messing ausbildet, in der Messingkörner (8) eingelagert sind, **dadurch gekennzeichnet, dass** die eingelagerten Messingkörner eine α+β- und oder α+β'-Phase aufweisen.

2. Drahtelektrode (10) nach Anspruch 1, **dadurch gekennzeichnet, dass** die Drahtelektrode (10) in einer Querschnittsansicht kreisförmig ausgebildet ist, wobei die eingelagerten Messingkörner (8) länglich ausgestaltet und überwiegend in radialer Richtung ausgerichtet sind.

3. Drahtelektrode (10) nach Anspruch 1 oder 2, **dadurch gekennzeichnet, dass** die Alpha/Beta-Mantelschicht (6) die äußerste Mantelschicht ist.

4. Drahtelektrode (10) nach Anspruch 3, **dadurch gekennzeichnet, dass** der Mantel (5) vollständig aus der Alpha/Beta-Mantelschicht (6) besteht.

5. Drahtelektrode (10) nach Anspruch 1 oder 2, **dadurch gekennzeichnet, dass** der Mantel (5) eine γ-Mantelschicht (12) aufweist, die überwiegend aus γ-Messing besteht.

6. Drahtelektrode (10) nach Anspruch 5, **dadurch gekennzeichnet, dass** die γ-Mantelschicht (12) vollständig aus γ-Messing besteht.

7. Drahtelektrode (10) nach Anspruch 5, **dadurch gekennzeichnet, dass** die γ-Mantelschicht (12) die äußerste Mantelschicht ist.

8. Drahtelektrode (10) nach einem der vorhergehenden Ansprüche, **dadurch gekennzeichnet, dass** der Kern (2) zumindest in seiner äußeren an den Mantel (5) grenzenden Kernaußenschicht aus Kupfer oder α-Messing besteht und in einer Querschnittsansicht eine gezackte Außenkontur aufweist.

9. Verfahren zum Herstellen einer Drahtelektrode (10) gemäß einem der Ansprüche 1 bis 8, bei dem auf einem elektrisch leitfähigen Ausgangsdraht (1), der eine Kernaußenschicht aus Kupfer oder α-Messing aufweist, eine Zinkschicht (3) aufgebracht wird, **dadurch gekennzeichnet, dass** der mit einer Zinkschicht (3) versehene Ausgangsdraht (1) stationär unter einer Schutzgasatmosphäre über eine Haltezeit zwischen 2 und 4 Stunden hinweg bei Glühtemperaturen zwischen 450°C und 600°C geglüht und anschließend mit einer Abkühlrate zwischen 60 und 80°C pro Stunde abgekühlt und auf seinen Enddurchmesser gezogen wird.

10. Verfahren nach Anspruch 9, **dadurch gekennzeichnet, dass** die Haltezeit 3 Stunden und die Glühtemperatur 500°C betragen.

11. Verfahren nach Anspruch 9 oder 10, **dadurch gekennzeichnet, dass** der der Ausgangsdraht (1) einen Durchmesser zwischen 0,5 und 1,5 mm und die Zinkschicht (3) eine Dicke zwischen 1 und 20 µm aufweisen.

12. Verfahren nach einem der Ansprüche 9 bis 11, **dadurch gekennzeichnet, dass** die Drahtelektrode nach dem Ziehen auf den Enddurchmesser einer Entspannungswärmebehandlung unterzogen wird.

13. Verfahren nach einem der Ansprüche 9 bis 12, **dadurch gekennzeichnet, dass** die Drahtelektrode (4) mit einer Zinkschicht (11) beschichtet, anschließend auf ihren Enddurchmesser gezogen und schließlich in einer Schutzgasatmosphäre geglüht wird.

14. Verfahren nach Anspruch 13, **dadurch gekennzeichnet, dass** das Glühen in einem Durchziehglühofen bei Temperaturen zwischen 250°C und 350°C und einer Durchziehgeschwindigkeit zwischen 0,4 und 1,5 m/s erfolgt.

## Claims

1. Wire electrode (10) for the spark-erosive cutting of articles, comprising an electrically conductive core (2) and a cladding (5) surrounding the core (2), said cladding having at least one alpha/beta-cladding layer (6), and forming a homogenous phase (7) composed of β-brass and/or β'-brass, in which brass grains (8) are embedded, **characterized in that** the embedded brass grains have an α+β- and/or α+β'-phase.

2. Wire electrode (10) according to Claim 1, **characterized in that** the wire electrode (10) is formed in circular fashion in a cross-sectional view, wherein the embedded brass grains (8) are configured in elongate fashion and are predominantly oriented in a radial direction.

3. Wire electrode (10) according to Claim 1 or 2, **characterized in that** the alpha/beta-cladding layer (6) is the outermost cladding layer.

4. Wire electrode (10) according to Claim 3, **characterized in that** the cladding (5) completely consists of the alpha/beta-cladding layer (6).

5. Wire electrode (10) according to Claim 1 or 2, **characterized in that** the cladding (5) has a γ-cladding layer (12) that predominantly consists of γ-brass.

6. Wire electrode (10) according to Claim 5, **characterized in that** the γ-cladding layer (12) completely consists of γ-brass.

7. Wire electrode (10) according to Claim 5, **characterized in that** the γ-cladding layer (12) is the outermost cladding layer.

8. Wire electrode (10) according to any of the preceding claims, **characterized in that** the core (2) at least in its outer core exterior layer adjoining the cladding (5) consists of copper or α-brass and has a jagged exterior contour in a cross-sectional view.

9. Method for producing a wire electrode (10) according to any of Claims 1 to 8, wherein a zinc layer (3) is applied on an electrically conductive starting wire (1) having a core exterior layer composed of copper or α-brass, **characterized in that** the starting wire (1) provided with a zinc layer (3) is annealed in a stationary manner under a protective gas atmosphere over a holding time of between 2 and 4 hours at annealing temperatures of between 450°C and 600°C and subsequently is cooled at a cooling rate of between 60 and 80°C per hour and is drawn to its final diameter.

10. Method according to Claim 9, **characterized in that** the holding time is 3 hours and the annealing temperature is 500°C.

11. Method according to Claim 9 or 10, **characterized in that** the starting wire (1) has a diameter of between 0.5 and 1.5 mm and the zinc layer (3) has a thickness of between 1 and 20 µm.

12. Method according to any of Claims 9 to 11, **characterized in that** after having been drawn to the final diameter, the wire electrode is subjected to a stress-relieving heat treatment.

13. Method according to any of Claims 9 to 12, **characterized in that** the wire electrode (4) is coated with a zinc layer (11), subsequently drawn to its final diameter and finally annealed in a protective gas atmosphere.

14. Method according to Claim 13, **characterized in that** the annealing is carried out in a continuous-drawing annealing furnace at temperatures of between 250°C and 350°C and a continuous-drawing speed of between 0.4 and 1.5 m/s.

## Revendications

1. Fil-électrode (10) destiné à la coupe par étincelage d'objets, comportant un noyau (2) électroconducteur et une gaine (5) qui entoure le noyau (2) et présente au moins une couche de gaine alpha/bêta (6), qui forme une phase homogène (7) constituée de laiton b et/ou de laiton b' dans laquelle sont incorporés des grains de laiton (8), **caractérisé en ce que** les grains de laiton incorporés présentent une phase a+b et/ou a+ b'.

2. Fil-électrode (10) selon la revendication 1, **caractérisé en ce que** le fil-électrode (10) est réalisé de manière circulaire en section transversale, dans lequel les grains de laiton (8) incorporés présentent une forme allongée et sont principalement alignés dans la direction radiale.

3. Fil-électrode (10) selon la revendication 1 ou 2, **caractérisé en ce que** la couche de gaine alpha/bêta (6) est la couche de gaine la plus externe.

4. Fil-électrode (10) selon la revendication 3, **caractérisé en ce que** la gaine (5) est entièrement constituée de la couche de gaine alpha/bêta (6).

5. Fil-électrode (10) selon la revendication 1 ou 2, **caractérisé en ce que** la gaine (5) présente une couche de gaine g (12) qui est principalement constituée de laiton g.

6. Fil-électrode (10) selon la revendication 5, **caractérisé en ce que** la couche de gaine g (12) est entièrement constituée de laiton g.

7. Fil-électrode (10) selon la revendication 5, **caractérisé en ce que** la couche de gaine g (12) est la couche de gaine la plus externe.

8. Fil-électrode (10) selon l'une des revendications précédentes, **caractérisé en ce que** le noyau (2) est constitué de cuivre ou de laiton a au moins dans sa couche extérieure de noyau adjacente à la gaine (5) et présente un contour extérieur dentelé en coupe transversale.

9. Procédé de fabrication d'un fil-électrode (10) selon l'une des revendications 1 à 8, dans lequel une couche de zinc (3) est appliquée sur un fil de départ (1) électroconducteur qui présente une couche extérieure de noyau constituée de cuivre ou de laiton, **caractérisé en ce que** le fil de départ (1) pourvu d'une couche de zinc (3) est recuit de manière stationnaire sous atmosphère de gaz protecteur pendant un temps de maintien compris entre 2 et 4 heures à des températures de recuit comprises entre 450°C et 600°C, puis est refroidi à une vitesse de refroidissement comprise entre 60 et 80°C par heure et étiré jusqu'à son diamètre final.

10. Procédé selon la revendication 9, **caractérisé en ce que** le temps de maintien est de 3 heures et la température de recuit est de 500°C.

11. Procédé selon la revendication 9 ou 10, **caractérisé en ce que** le fil de départ (1) présente un diamètre compris entre 0,5 et 1,5 mm et la couche de zinc (3) présente une épaisseur comprise entre 1 et 20 µm.

12. Procédé selon l'une des revendications 9 à 11, **caractérisé en ce que** le fil-électrode est soumis à un traitement thermique de détente après avoir été étiré jusqu'au diamètre final.

13. Procédé selon l'une des revendications 9 à 12, **caractérisé en ce que** le fil-électrode (4) est revêtu d'une couche de zinc (11), puis étiré jusqu'à son diamètre final et enfin recuit dans une atmosphère de gaz protecteur.

14. Procédé selon la revendication 13, **caractérisé en ce que** le recuit est effectué dans un four de recuit à passage continu à des températures comprises entre 250°C et 350°C et à une vitesse de passage comprise entre 0,4 et 1,5 m/s.
